# FASCICULE DE BREVET EUROPEEN

(11) **EP 3 298 378 B1**
(45) Date de publication et mention de la délivrance du brevet: **26.02.2020**
(21) Numéro de dépôt: 16727639.3
(22) Date de dépôt: 17.05.2016
(51) Int. Cl.: G01N 1/22

(54) **PROCEDE DE PRELEVEMENT ET D'EXTRACTION DE POLLUANTS DANS UN FLUIDE, CARTOUCHE DE PRELEVEMENT, DISPOSITIFS DE PRELEVEMENT ET D'EXTRACTION METTANT EN OEUVRE LEDIT PROCEDE**
VERFAHREN ZUR ENTNAHME UND EXTRAKTION VON SCHADSTOFFEN IN EINER FLÜSSIGKEIT, PROBENAHMEKASSETTE, PROBENAHME- UND EXTRAKTIONSVORRICHTUNGEN MIT DIESEM VERFAHREN
METHOD FOR SAMPLING AND EXTRACTING POLLUTANTS IN A FLUID, SAMPLING CARTRIDGE, SAMPLING AND EXTRACTION DEVICES USING SAID METHOD

(30) Priorité: 22.05.2015 FR 1554663
(43) Date de publication de la demande: 28.03.2018
(73) Titulaire: Action Europe Sarl, 68390 Sausheim (FR); NCX Sarl, 64330 Garlin (FR)
(72) Inventeur: HOFFARTH, Olivier, 68390 Sausheim (FR); JUNCA, Serge, 64350 Maspie Lalonquere Juillacq (FR)
(74) Mandataire: Koelbel, Caroline
(86) Numéro de dépôt international: PCT/EP2016/060999
(87) Numéro de publication internationale: WO 2016/188796

(56) Documents cités:
- EP-A1- 0 042 683
- DE-B3-102006 025 932
- DE-U1- 8 707 698
- JP-A- 2009 053 121
- US-A- 5 574 230
- US-B1- 6 167 767
- ELKE FRIES ET AL: "Improvement of HS-SPME for analysis of volatile organic compounds (VOC) in water samples by simultaneous direct fiber cooling and freezing of analyte solution", ANALYTICAL AND BIOANALYTICAL CHEMISTRY, SPRINGER, BERLIN, DE, vol. 386, no. 5, 5 septembre 2006 (2006-09-05), pages 1497-1503, XP019441155, ISSN: 1618-2650, DOI: 10.1007/S00216-006-0715-8

## Description

### Domaine technique

La présente invention se rapporte au prélèvement des polluants dans un fluide tel que dans l'air ou dans l'eau, qui est effectué selon des normes spécifiques décrites dans la littérature.

La mesure de la qualité de l'air ambiant intérieur s'applique généralement à la surveillance :
- des habitations
- des locaux recevant du public
- des bureaux

La mesure de la qualité de l'eau courante concerne l'eau distribuée dans les habitations et tous les lieux publics, mais aussi l'eau de surface des rivières, l'eau de puisage, etc.

Ces exemples d'application ne sont bien entendu pas limitatifs.

La présente invention concerne donc un procédé de prélèvement et d'extraction de polluants dans un fluide, une cartouche de prélèvement, différents dispositifs de prélèvement et d'extraction mettant en œuvre ledit procédé.

### Etat de la technique

Le prélèvement de polluants dans l'air est aujourd'hui effectué de manière active ou passive. Par polluants, on entend par exemple les composés organiques volatils (COV) qui sont des composés organiques pouvant facilement se trouver sous forme gazeuse dans l'atmosphère, mais également tout autre type de substances nocives pour la santé, telles que les pesticides, herbicides, acaricides, hydrocarbures aromatiques polycycliques (HAP), etc.

Dans le cas d'un prélèvement passif, la collecte de l'échantillon s'effectue au travers d'un badge de prélèvement. Le badge de prélèvement est porté par une personne ou disposé dans une pièce à échantillonner, et contient des capsules garnies d'un adsorbant pour effectuer une collecte passive de polluants par diffusion au travers d'une membrane. La collecte pourra durer 8 heures à 4,5 jours en fonction de l'exposition des personnes et du type de polluants à prélever.

Dans le cas d'un prélèvement actif, la collecte de l'échantillon s'effectue à l'aide de pompes connectées à des tubes de prélèvement contenant un ou plusieurs adsorbants sélectifs en fonction des polluants à collecter. Ces adsorbants se présentent traditionnellement sous forme de poudre. Après le pompage d'une quantité connue d'air ou d'eau au travers du tube contenant l'adsorbant servant à piéger les polluants, le polluant piégé est soit extrait à l'aide d'un solvant très toxique de type CS2 (sulfure de carbone) soit désorbé thermiquement à l'aide d'un désorbeur thermique.

Le prélèvement actif s'effectue généralement à l'aide d'une pompe à débit constant qui est raccordée à un tube à deux segments, garni d'un ou de plusieurs adsorbants spécifiques de type charbon actif, Tenax™, chromosorb, etc. pour piéger les polluants en fonction de leur nature et des concentrations attendues.

Le préleveur raccorde le tube (piège) à la pompe et règle le débit recommandé en fonction du polluant et de la concentration d'exposition tolérée par le législateur. La durée de prélèvement recommandée est de 24 heures (Norme française expérimentale XPX43-402). Bien entendu, le volume à prélever et le débit à respecter sont imposés pays par pays dans les réglementations en vigueur.

Après la phase de prélèvement, le tube est ouvert à une extrémité pour en retirer l'adsorbant sur lequel ont été collectés les polluants. Les deux segments subissent une extraction au solvant de type CS2 ou à l'alcool benzylique avant d'être analysés séparément pour vérifier si l'adsorbant n'a pas été saturé sur le premier segment.

Ces systèmes présentent beaucoup d'inconvénients:
- La perte d'information lors de l'extraction par le solvant par la dilution de l'échantillon, la reproductibilité est difficile du fait du mode de prélèvement: courant d'air, maitrise des flux d'air, homogénéité de l'adsorbant, etc.
- La conservation de l'échantillon et son intégrité n'est pas garanti, en effet, il existe un risque de contamination de l'adsorbant à analyser, car l'adsorbant est mis en contact avec l'extérieur entre la collecte et l'analyse.
- Certains composés restent adsorbés sur l'adsorbant.
- L'extraction nécessite l'utilisation de solvants polluants.
- Le temps mis en œuvre pour l'extraction est très important.
- Le prix reste élevé.

La technique d'extraction par désorption thermique est plus efficace et sensible. Elle est généralement utilisée dans le cadre du prélèvement actif par pompage sur des cartouches en acier inox ou verre contenant un adsorbant maintenu par de la laine de quartz. Un double prélèvement ou la division du flux de gaz lors de la désorption et la recollecte de 50% sur un tube de rétention est en général nécessaire pour conserver un témoin. Cette technique demande le conditionnement et le contrôle systématique des tubes avant usage. La conservation après le prélèvement nécessite l'usage de capuchons d'obturation des tubes dont l'étanchéité reste souvent discutable. Les tubes présentent une grande dispersion par rapport à la perte de charge de chaque tube avant et pendant le prélèvement. Les tubes ne peuvent pas être utilisés pour le prélèvement de liquides. Le volume mort interne est très important et réduit la sensibilité.

Par ailleurs, aussi bien pour les badges de prélèvement passifs que pour les tubes de prélèvement actifs, il est toujours nécessaire d'ouvrir les extrémités pour effectuer le prélèvement et ensuite de les refermer pour transférer le badge ou le tube de prélèvement au laboratoire et procéder à une analyse par chromatographie gazeuse ou spectrométrie de masse.

Ces multiples manipulations d'ouvertures et de fermetures des badges ou tubes de prélèvement au moyen de capsules ou capuchons en matière plastique, de capuchons équipés d'un joint torique, ou de systèmes de fermeture avec cône d'étanchéité mécanique, ne permettent pas de garantir une étanchéité parfaite de ces dispositifs de prélèvement du site de mesure jusqu'au laboratoire.

Les contaminations croisées entre les dispositifs de prélèvement et les systèmes connexes sont récurrents et bien connus par l'hommes du métier. Ces dispositifs de prélèvement étant réutilisables, l'opérateur doit par conséquent les conditionner avant le prélèvement et après l'analyse pendant des heures sous un flux de gaz inerte et un chauffage continu afin de les purifier. Ensuite l'opérateur doit effectuer un blanc d'un lot de dispositifs de prélèvement pour établir leur degré de pureté avant d'effectuer le prélèvement réel sur site.

D'autre part, l'utilisation d'adsorbants classiques tels que le Tenax® ou le charbon actif dans les conditions réelles montre qu'en fonction du taux d'humidité sur les lieux du prélèvement, l'adsorbant se charge en eau, se compacte et s'obture pour finalement être saturé d'eau et laisser passer les molécules recherchées. De plus, les tubes de prélèvement sont généralement entièrement remplis d'adsorbants, ce qui réduit considérablement leur volume interne et rend impossible une interaction homogène entre le flux d'air ou de gaz et l'adsorbant pour garantir un bon prélèvement. Les tubes étant toujours ouverts pendant la phase de prélèvement, le flux d'air s'échappe forcément par l'une de ses extrémités, réduisant encore les chances d'effectuer un prélèvement représentatif.

Les publications EP 0 042 683 A1 et US 5,574,230 illustrent deux exemples de ce type de tubes de prélèvement bouchés à leurs extrémités par des capuchons démontables rendus étanches par des joints toriques ou similaires, qui doivent être ouverts pendant la phase de prélèvement, puis refermés, et à nouveau ouverts pendant la phase d'analyse.

La publication US 6,167,767 B1 décrit un autre type de tube de prélèvement dont les extrémités sont fermées par une cloison perçable, maintenue par un bouchon serti autour d'un joint torique, chaque bouchon étant pourvu d'une ouverture centrale pour recevoir une aiguille de prélèvement d'une machine automatisée de prélèvement séquentiel de gaz. Même si, dans cet exemple, l'étanchéité du tube de prélèvement est préservée avant et pendant le prélèvement, elle est réduite à néant au moment de l'analyse du prélèvement sur une machine de désorption thermique qui nécessite le retrait des bouchons sertis.

La publication DE 10 2006 025 932 B3 décrit un dispositif d'analyse en laboratoire utilisant un flacon métallique dans lequel est introduit un tube en acier ou en verre dans lequel est placé un échantillon ou un adsorbant à analyser. L'extrémité du flacon et du tube est obturée par une cloison étanche et perçable, maintenue par un capuchon à vis, pourvu d'une ouverture centrale traversée par deux aiguilles d'un désorbeur thermique automatique pour permettre la circulation d'un gaz vecteur autour et à travers du tube. Ce dispositif n'est pas prévu pour effectuer un prélèvement sur site et nécessite la manipulation du tube d'échantillons avant et après analyse avec de forts risques de contamination de l'opérateur.

La publication JP 2009 053121 A décrit également un dispositif d'analyse en laboratoire d'échantillons solides déposés dans un creuset placé dans un four haute température. Les gaz générés sont piégés dans des tubes en verre à haute résistance thermique, garnis d'un adsorbant pour retenir les gaz, et fermés aux extrémités par de simples bouchons souples à haute résistance thermique, perçables par les aiguilles d'un désorbeur thermique automatique permettant la circulation d'un gaz vecteur au travers du tube. Ce tube n'est donc pas prévu pour effectuer un prélèvement sur site et son étanchéité n'est pas garantie.

### Description de l'invention

L'objet de l'invention est de proposer un procédé de prélèvement et d'extraction complètement sécurisé, fiable et reproductible grâce à l'utilisation d'une cartouche de prélèvement prête à l'emploi, à usage unique, pouvant être utilisée seule ou dans un dispositif de prélèvement dédié, et pouvant alimenter un dispositif d'extraction connu ou dédié, qui permettent ainsi une mesure sûre sans contamination de l'adsorbant ni avant ni après le prélèvement, étant donné que la cartouche permet d'effectuer toutes les étapes du procédé du prélèvement à l'analyse, et pouvant être facilement stockée et transportée sans perte d'informations. En particulier la cartouche de prélèvement pourra être inerte, tracée et recyclable permettant d'effectuer à la fois des prélèvements actifs ou passifs.

Dans ce but, dans le procédé de prélèvement et d'extraction de polluants dans un fluide selon la revendication 1 l'on utilise une seule et même cartouche de prélèvement pour effectuer dans une première étape ledit prélèvement en mode passif ou en mode actif, et dans une seconde étape l'extraction des polluants collectés par désorption thermique et circulation d'un gaz vecteur à travers ladite cartouche sans avoir besoin de l'ouvrir préservant ainsi l'intégrité de son contenu et évitant tout risque de contamination croisée, l'étape de prélèvement étant réalisée au moyen de la cartouche de prélèvement seule ou d'un dispositif de prélèvement contenant ladite cartouche, et l'étape d'extraction étant réalisée au moyen d'un dispositif d'extraction ou d'un dispositif de prélèvement et d'extraction contenant ladite cartouche, ladite cartouche de prélèvement comportant une enveloppe en matière inerte, contenant un matériau adsorbant, étant remplie d'un gaz inerte sous pression de sorte que cette surpression constitue un indicateur qui permet de vérifier la présence d'une pression dans la cartouche et donc de contrôler l'étanchéité de la cartouche avant utilisation, et étant fermée de façon étanche par deux capuchons situés aux deux extrémités de l'enveloppe, chaque capuchon comportant une ouverture fermée par un joint d'étanchéité perçable constitué d'un film en silicone et d'au moins une couche barrière.

Pour effectuer l'étape de prélèvement en mode passif, de manière avantageuse, l'on retire de ladite cartouche un des capuchons pour ouvrir l'enveloppe et laisser entrer le fluide à analyser, et une fois le prélèvement réalisé, l'on referme l'enveloppe avec ledit capuchon.

Pour effectuer l'étape de prélèvement en mode actif ou l'étape d'extraction, de manière avantageuse, l'on fait passer le fluide à analyser ou le gaz vecteur dans la cartouche par des canules du dispositif de prélèvement, du dispositif d'extraction ou du dispositif de prélèvement et d'extraction, pour percer les extrémités de ladite cartouche à travers lesdits joints d'étanchéité.

Dans ce but également, la cartouche de prélèvement selon la revendication 5 constitue une cartouche prête à l'emploi, à usage unique et comprend une enveloppe, par exemple cylindrique, en matière inerte dans laquelle est disposé un matériau adsorbant, fermée de façon étanche par deux capuchons situés aux deux extrémités de l'enveloppe, chaque capuchon comportant une ouverture qui est fermée par un joint d'étanchéité perçable, constitué d'un film en silicone et au moins une couche barrière, de préférence en aluminium ou en téflon™ (polytétrafluoroéthylène PTFE), ladite cartouche étant remplie d'un gaz inerte sous pression de sorte que cette surpression constitue un indicateur qui permet de vérifier la présence d'une pression dans la cartouche et donc de contrôler l'étanchéité de la cartouche avant utilisation. L'utilisation d'un film spécifique en silicone et aluminium ou en aluminium/silicone/aluminium permet de résister aux températures élevées nécessaires à la technique de désorption thermique soit entre 250°C et 350°C. La silicone a une capacité de recèlement qui permet de refermer un trou qui y serait pratiqué. L'aluminium a un effet barrière permettant d'obtenir une étanchéité parfaite aux molécules les plus volatiles. Le téflon™ peut remplacer l'aluminium pour un résultat similaire. Le matériau adsorbant est ainsi totalement isolé de l'environnement extérieur grâce à une étanchéité contrôlée et performante. Le film permet également de limiter l'introduction incontrôlée d'air à la fin d'un prélèvement actif. D'autre part, l'aluminium ou le téflon™ est neutre vis-à-vis des traces à analyser. La cartouche est de préférence conditionnée sous gaz inerte (par exemple l'argon plus lourd que l'air) afin d'éviter toute contamination croisée avec l'environnement extérieur. A ce jour aucun tube d'adsorption pour le domaine de l'environnement n'est conditionné sous gaz inerte.

Le fait de proposer le système de prélèvement sous forme de cartouche permet d'ajouter un solvant tel que du dichlorométhane pour effectuer une extraction de préférence en agitant la cartouche. L'extrait ne sera pas en contact avec l'air du laboratoire et une contamination croisée sera impossible contrairement aux systèmes sur le marché actuellement. Après la phase d'extraction, l'injection pourra se faire sur un système LC-MS (chromatographie liquide couplée à la spectrométrie de masse) par exemple pour doser les médicaments ou perturbateurs endocriniens dans l'eau. La technique par extraction de solvant directement dans la cartouche pourra également convenir à d'autres applications telles que le dosage des allergènes, stupéfiants, drogues ou explosifs. La cartouche pourra être adaptée par rapport à sa géométrie pour être transférée directement sur les portoirs d'échantillons des différents analyseurs automatiques.

Avantageusement, l'enveloppe de la cartouche est de préférence en verre. Le verre est ambré ou transparent. L'usage du verre ambré évite la dégradation de molécules photosensibles collectées. On utilisera de préférence un verre ambré borosilicaté type 1. Le traitement de surface du verre (passivation ou désactivation) permet également d'abaisser les limites de détection de certaines molécules comme celles des pesticides. L'enveloppe pourra avoir les parois de verre revêtues d'un film (dépôt d'une phase sélective de type silicone ou PDMS (polydiméthylsiloxane)) avec une sélectivité et une épaisseur de film appropriée. Après le dépôt de phase, la cartouche est scellée sous gaz inerte.

Avantageusement, le matériau adsorbant est un polymère. La cartouche contient un polymère plein, appelé par la suite polymère solide pour le différencier d'un polymère en poudre. Il peut être aussi un polymère sous forme de poudre ou de billes en verre revêtues d'un polymère, un adsorbant de type charbon actif ou graphite, un polymère poreux de type Tenax™, une diatomite ou une argile, tout support adsorbant microporeux, des capteurs miniaturisés, des supports papiers imprégnés d'un réactif ou des indicateurs colorimétriques, des géloses. On privilégiera l'utilisation d'un polymère solide, hydrophobe, à haut pouvoir d'adsorption, comme par exemple un polymère organominéral solide et inerte de la famille des siloxanes. Il sera à usage unique, prêt à l'emploi, et formera un consommable. Il pourra se présenter sous la forme d'un batonnet par exemple cylindrique, positionné à l'aide d'un ou deux centreurs axiaux dans le tube. Le centreur est une grille métallique à porosité connue et régulière par exemple de 200µm pourvue d'un trou central égal au diamètre du batonnet de polymère (cylindre) permettant de positionner de manière axiale le polymère au centre de la cartouche et à distance égale des parois de l'enveloppe en verre. Cette technique permettra un échange homogène de la phase gazeuse ou liquide avec le polymère pendant la phase d'adsorption.

Avantageusement, un des capuchons est serti sur l'enveloppe de la cartouche et l'autre capuchon est soit serti, clipsé ou vissé sur l'enveloppe. La cartouche présente alors un embout à sertir d'un diamètre de 11mm, par exemple, d'un côté et un embout à clipser de 11mm, par exemple, de l'autre coté permettant l'usage de capuchons à clipser mais aussi de capuchons à sertir. Elle peut également comporter un embout universel permettant l'usage de capuchons à visser, à clipser ou à sertir. Cette configuration permet l'ouverture de la cartouche sans utiliser d'outils spécifiques pour retirer le polymère si nécessaire ou pour effectuer un prélèvement passif.

Avantageusement, l'enveloppe de la cartouche est en matériau réutilisable, par exemple si le tube est en verre. On a ainsi un dispositif à usage unique mais en partie recyclable donc écologique. La cartouche en verre est recyclable par le fabricant. Le produit est écologique et réutilisable après l'extraction des capuchons et le nettoyage et la décontamination du verre.

La cartouche peut comporter avantageusement un marquage individuel de traçabilité.

Elle peut également comporter une résistance chauffante intégrée dans son enveloppe en verre, et les capuchons (11, 12) peuvent être en métal pour former des électrodes raccordées à ladite résistance chauffante, pour l'étape de désorption thermique.

Dans le but précité, l'invention concerne également, selon la revendication 14, un dispositif de prélèvement actif comprenant un logement pour une cartouche de prélèvement telle que définie ci-dessus, caractérisé en ce qu'il comprend ladite cartouche de prélèvement, une canule fixe et une canule mobile en translation disposées de chaque coté du logement, agencées pour percer les extrémités de ladite cartouche à travers lesdits joints d'étanchéité, un moyen d'actionnement de la canule mobile pour la déplacer entre une position escamotée et une position de perçage de la cartouche, et un système de verrouillage de la canule mobile en position de perçage, lesdites canules étant connectées à un circuit de fluide à analyser. La cartouche n'a pas besoin d'être ouverte puisque le prélèvement se fera par les canules. L'utilisation est donc facile.

Avantageusement, une canule est montée sur un raccord amovible. Ceci qui permet un démontage et un nettoyage facile de la canule.

Avantageusement, la canule a une pointe conique avec au moins un perçage latéral. Ceci évite le bouchage par le joint de cartouche.

Avantageusement, le moyen d'actionnement comprend un ressort de rappel. Le ressort permet à la canule mobile de reprendre une position escamotée lorsqu'on la libère de la position de perçage.

Avantageusement, le moyen d'actionnement comprend un système de verrouillage en chicane. La canule est verrouillée en position de perçage par le moyen d'actionnement lui-même.

Selon une disposition particulière, le dispositif comprend un indicateur de niveau de charge d'une batterie prévue pour alimenter une pompe d'aspiration du fluide. Cet indicateur sera par exemple une LED.

Selon une autre disposition, le dispositif comprend un indicateur d'interruption de l'alimentation de ladite pompe. On pourra ainsi identifier les mesures faussées. Cet indicateur pourra être constitué d'une LED.

Avantageusement, il comprend un indicateur du temps de l'incrémentation choisi.

Selon une première variante, l'une des canules est ouverte sur l'air extérieur et l'autre à une pompe d'aspiration. Cette variante permet de mesurer la pollution de l'air dans une pièce, ou dans un environnement donné.

Selon une deuxième variante, l'une des canules est connectée à une arrivée d'eau et l'autre à une sortie d'écoulement gravitaire. Cette variante permet, par exemple d'analyser et de mesurer la pollution de l'eau du robinet distribuée au quotidien à des millions de foyers. Un logement spécifique à visser sur la sortie des robinets d'eau est alors prévu. Une fois vissé, il suffira d'enclencher ou d'armer le dispositif de prélèvement à double aiguille pour laisser passer l'eau du robinet au travers de la cartouche et concentrer les polluants présents sur le matériau adsorbant. Il pourra aussi être équipé d'un dispositif de mesure ou de vérification du débit d'eau qui aura traversé la cartouche de prélèvement.

Avantageusement, une électrovanne est disposée en amont de la canule connectée à l'arrivée d'eau. Cette électrovanne pourra comprendre une temporisation afin de définir une quantité d'eau à analyser.

Selon une troisième variante, les canules débouchent dans un même flacon d'eau et une pompe est disposée entre une des canules et le flacon. Le circuit d'eau se fait ainsi en circuit fermé, il est ainsi possible de travailler sur un temps non limité.

Selon une quatrième variante, l'une des canules comprend un embout buccal. On peut ainsi analyser l'air expiré. On vissera un embout à usage unique (du type embout d'éthylomètre) sur le dispositif de prélèvement contenant la cartouche de prélèvement. Ce dispositif permettra de concentrer l'air expiré par l'humain afin de concentrer d'éventuel marqueur ou métabolites qui permettent d'identifier certaines formes de cancers. L'air exhalé passe par la cartouche de prélèvement contenant le polymère ou un matériau adsorbant spécifique pour y être concentré avant d'être évacué par une canule à grand diamètre interne située à la sortie de la cartouche. Le patient devra renouveler le soufflage à plusieurs reprises en fonction de divers critères. Le système pourra être équipé d'un dispositif de mesure ou de vérification du débit d'air qui aura traversé la cartouche de prélèvement.

Après la phase de prélèvement, la cartouche sera analysée par désorption thermique ou extraction suivie d'une identification par GC-MS ou LC-MS (chromatographie gazeuse ou liquide couplée à la spectrométrie de masse).

L'invention concerne , selon la revendication 22, un dispositif de prélèvement passif, ledit dispositif comprend un corps creux définissant un logement pour une cartouche de prélèvement telle que définie ci-dessus, caractérisé en ce qu'il comprend ladite cartouche de prélèvement, et en ce que le corps creux comprend une extrémité fermée et une extrémité ouverte, le dispositif comportant deux bouchons montés de manière amovible sur lesdites extrémités pour être interchangeables, un premier bouchon étanche et un deuxième bouchon ouvert comprenant une grille de diffusion. Avec ce dispositif, la cartouche est introduite dans le corps creux qui est spécifique et permet d'être porté par un opérateur à l'aide d'une agrafe, fixée sur un fond métallique à l'aide de l'aimant ou être suspendu à l'aide l'un anneau fixé sur le clip. Le dispositif peut être pourvu de tous ces accessoires car la hauteur de prélèvement est très importante. Avant utilisation, il faut retirer le capuchon étanche de la cartouche, puis inter changer le bouchon étanche avec le bouchon équipé de la grille de diffusion. Pendant le prélèvement l'air passera au travers de la grille de diffusion qui pourra être en acier inox ce qui permet d'obtenir un passage contrôlé au travers d'un orifice standardisé. Après le prélèvement le capuchon étanche est remonté sur la cartouche et le bouchon intégrant le joint d'étanchéité est vissé sur le dispositif. Ce dispositif de prélèvement passif a l'avantage de présenter une double étanchéité et une double fonctionnalité. Avantageusement, l'extrémité fermée du corps creux comprend un évidement fermé par un des bouchons pour recevoir un des capuchons de la cartouche pendant l'étape de prélèvement. Le dispositif sert ainsi non seulement à la collecte de l'échantillon mais également à conserver le capuchon étanche de la cartouche dans le bouchon en attendant la fin du prélèvement. Le joint assure l'étanchéité du dispositif pour l'expédition de l'ensemble au laboratoire. Ce dispositif de prélèvement assure la conservation de l'échantillon prélevé. Le bouchon étanche peut comporter un aimant pour fixer ledit dispositif sur tout support métallique.

L'invention concerne également, selon la revendication 25, un dispositif de prélèvement passif comprenant une cartouche telle que définie ci-dessus, caractérisé en ce que ladite cartouche de prélèvement constitue à elle seule ledit dispositif de prélèvement passif, et en ce qu'elle est équipée d'une grille de diffusion disposée à proximité d'une extrémité de l'enveloppe et un capuchon étanche clipsé ou vissé sur ladite extrémité. Il est donc possible d'utiliser la cartouche elle-même comme un dispositif de prélèvement en retirant le capuchon amovible pour faire le prélèvement et en le remettant une fois le prélèvement terminé.

L'invention concerne également, selon la revendication 26, un dispositif d'extraction disposé entre une entrée d'un gaz vecteur et un analyseur, et comprenant un corps creux définissant un logement pour une cartouche de prélèvement telle que définie ci-dessus, et un élément chauffant de la cartouche, caractérisé en ce qu'il comprend ladite cartouche de prélèvement, une canule fixe et une canule mobile en translation disposées de chaque coté du logement, agencées pour percer les extrémités de ladite cartouche à travers lesdits joints d'étanchéité, un poussoir couplé à la canule mobile pour la déplacer entre une position escamotée et une position de perçage de la cartouche, une des canules étant destinée à être reliée à l'entrée de gaz vecteur et l'autre canule étant destinée à être reliée à l'injecteur d'un analyseur. Avantageusement, la canule mobile est actionnée par vissage. La canule peut donc être facilement enfoncée dans la cartouche à analyser. Le gaz vecteur est donc injecté d'un coté par une canule pour extraire les éléments à analyser et ressort de l'autre coté par l'autre canule reliée à l'injecteur d'un analyseur. Le gaz vecteur avec les éléments à analyser arrive ainsi sans contamination extérieure à l'analyseur.

L'invention concerne aussi, selon la revendication 27, un dispositif de prélèvement et d'extraction, caractérisé en ce qu'il comprend le dispositif d'extraction ci-dessus relié à un corps comprenant une pompe d'aspiration et un réservoir de gaz inerte, une des canules étant reliée par une électrovanne à ladite pompe d'aspiration lors de l'étape de prélèvement ou audit réservoir de gaz inerte lors de l'étape d'extraction, et l'autre canule étant destinée à être reliée à une entrée d'air lors de l'étape de prélèvement ou à un analyseur lors de l'étape d'extraction. De cette façon, la cartouche telle que définie ci-dessus peut être mise dans le dispositif, qui en mode prélèvement, va pouvoir aspirer l'air extérieur, par exemple, grâce à la pompe; une fois le prélèvement fini, on va chauffer la cartouche et réinjecter le gaz contenu dans la cartouche afin de l'envoyer vers un analyseur.

D'autres avantages pourront encore apparaître à l'homme du métier à la lecture des exemples ci-dessous, illustrés par les figures annexées, donnés à titre illustratif.

### Brève description des figures

- La figure 1 est une coupe d'un premier exemple d'enveloppe cylindrique de la cartouche selon l'invention,
- La figure 2 est une coupe d'un deuxième exemple d'enveloppe cylindrique de la cartouche selon l'invention,
- La figure 3 est une coupe d'un troisième exemple d'enveloppe cylindrique de la cartouche selon l'invention,
- La figure 4 est une vue en perspective d'un capuchon de la cartouche selon l'invention,
- La figure 5 est une coupe d'un premier mode de réalisation d'un dispositif de prélèvement selon l'invention,
- La figure 6 est le détail de la canule du dispositif de la figure 5,
- La figure 7 est le détail de la pointe de la canule de la figure 6,
- La figure 8 est une vue en perspective du dispositif de la figure 5,
- La figure 9 est une coupe d'un deuxième mode de réalisation d'un dispositif de prélèvement selon l'invention en position de prélèvement,
- La figure 10 est une coupe du deuxième mode d'extraction en position de transport,
- La figure 11 est une coupe du dispositif d'extraction selon l'invention,
- La figure 12 est une coupe d'une cartouche de prélèvement passif,
- La figure 13 est une coupe du dispositif de prélèvement et d'extraction selon l'invention, et
- La figure 14 est une perspective de la figure 13.

### Illustrations de l'invention et différentes manières de la réaliser

La cartouche de prélèvement 1 selon l'invention comprend une enveloppe 10, 10', 10" cylindrique, deux capuchons 11 et 12 disposés de chaque coté ou à chaque extrémité 100, 101 de l'enveloppe 10, 10', 10" et un matériau adsorbant 13 placé à l'intérieur de l'enveloppe 10, 10', 10". L'enveloppe 10, 10', 10" pourra être en verre ambré ou transparent. Le verre ambré a l'avantage de protéger de la lumière le matériau adsorbant 13 et les molécules photosensibles adsorbées. Le verre en général a également l'avantage d'être une matière inerte et de présenter une excellente conductivité thermique réduisant ainsi la durée de la désorption thermique. Cette enveloppe 10, 10', 10" de la cartouche 1 est de préférence cylindrique, mais peut avoir d'autres sections par exemple carrée, hexagonale, ovoïde, etc. en fonction des applications. Le matériau adsorbant 13 sera par exemple un polymère solide, à usage unique, prêt à l'emploi ou des adsorbants spécifiques permettant de piéger de manière universelle tous types de polluants. Les capuchons 11 et 12 sont scellés de façon étanche à l'enveloppe 10, 10', 10". Ils peuvent être également vissés, clipés ou sertis en fonction des applications. La fermeture doit de préférence pouvoir résister aux hautes températures, soit jusqu'à 350°C, et avoir des propriétés de recèlement particulières et une excellente neutralité.

Si on utilise un polymère solide, il pourra être à usage unique et prêt à l'emploi. On choisira de préférence un polymère hydrophobe, à haut pouvoir adsorbant, tel que par exemple un polymère organominéral solide et inerte de la famille des siloxanes. Il pourra se présenter sous la forme d'un batonnet par exemple cylindrique, ayant l'avantage de n'offrir aucune résistance lors du passage du fluide, et de ne générer qu'une très faible perte de charge, voire aucune perte de charge. Il sera de préférence positionné à l'aide d'un ou deux centreurs axiaux 14 dans l'enveloppe 10, 10', 10". Le centreur 14 est par exemple une grille métallique à porosité connue et régulière, par exemple de 200 µm, pourvue d'un trou central égal au diamètre du polymère (cylindre) permettant de positionner de manière axiale le polymère au centre de l'enveloppe 10, 10', 10" et à distance égale de ses parois. Cette technique permet un échange homogène de la phase gazeuse ou liquide avec le polymère pendant la phase d'adsorption. Tout autre moyen de centrage peut également convenir, l'essentiel étant qu'il n'entrave pas la circulation de fluide et l'interaction avec le polymère, et que la surface de contact avec le polymère soit la plus petite possible, voire ponctuelle.

La cartouche 1 peut également contenir un polymère sous forme de poudre ou des billes en verre revêtues d'un polymère, un adsorbant de type charbon actif ou graphite, un polymère poreux de type Tenax™, une diatomite ou argile, tout support adsorbant microporeux, mais également des capteurs miniaturisés, des supports papiers imprégnés d'un réactif ou des indicateurs colorimétriques, des géloses. La cartouche 1 pourra également contenir une association de plusieurs portions de capillaires contenant des phases ou des adsorbants et disposés de manière axiale au travers du centreur 14. L'air circulera au travers des capillaires multi-sélectifs et les polluants seront retenus dans ce dispositif spécifique.

La cartouche 1 pourra également contenir une gélose pour les analyses microbiologiques. Le dosage des légionnelles sera éventuellement envisageable.

Il est aussi possible de monter en série plusieurs cartouches contenant le même piège ou des pièges de nature différente pour augmenter la sélectivité lors du prélèvement de substances inconnues.

Le dimensionnement de la cartouche 1 et du matériau adsorbant 13 l'un par rapport à l'autre est optimisé pour réduire le volume intérieur de la cartouche 1, supprimer les volumes morts, de n'avoir que peu voire pas d'inertie, et augmenter ainsi la sensibilité de la cartouche 1.

Le conditionnement de la cartouche 1 est effectué sous gaz inerte, par exemple de l'argon qui est plus lourd que l'air, afin d'éviter toute contamination croisée avec l'environnement extérieur. Le fait de conditionner la cartouche 1 sous gaz inerte permet de remplir son volume intérieur de gaz inerte mettant sous pression les joints 110, 120 fermant ses extrémités. Cette surpression constitue un indicateur qui permet de vérifier la présence d'une pression dans la cartouche 1 et donc de contrôler l'étanchéité de la cartouche 1 avant utilisation.

Le scellement de la cartouche 1 est par conséquent effectué en usine, sous gaz inerte, par des machines spécifiques permettant de contrôler la force appliquée lors de l'opération de sertissage pour les capuchons concernés. On utilise des capuchons 11, 12 avec un joint 110, 120 spécifique constitué d'une membrane de silicone/aluminium ou aluminium/silicone/aluminium. La combinaison de matières résiste aux températures élevées nécessaires à la technique de désorption thermique soit entre 250°C et 350°C. La neutralité de l'aluminium vis-à-vis des traces à analyser est avantageuse, et l'effet barrière de l'aluminium permet d'obtenir une étanchéité parfaite aux molécules les plus volatiles. L'aluminium peut être remplacé par du téflon™ présentant sensiblement les mêmes propriétés. Ces joints 110, 120 peuvent être constitués d'une membrane composite, d'une superposition de couches de matière,etc. Chaque capuchon 11,12 comprend une partie extérieure en métal percé d'un trou 111, 121 fermé par le joint 110, 120. Le joint 110, 120 pourra être percé par une canule. Ce joint 110, 120 comportant du silicone a l'avantage d'être refermable de manière étanche après retrait de la canule, assurant ainsi toujours l'étanchéité de la cartouche 1 après prélèvement.

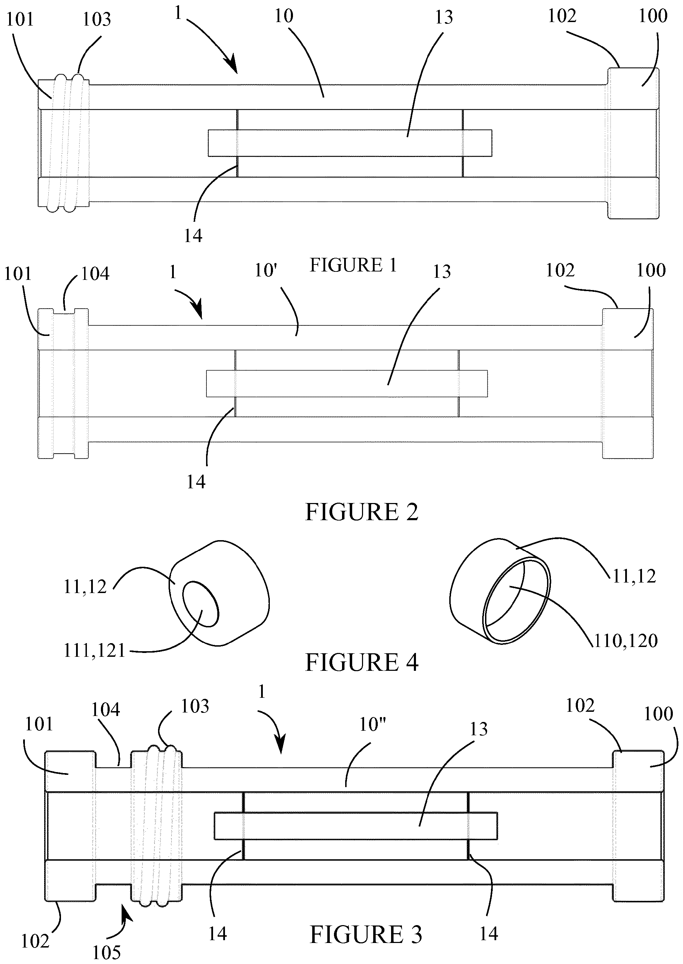

L'enveloppe 10 de la cartouche 1 illustrée à la figure 1 est mixte : du coté 100, elle comporte un embout à sertir 102 et de l'autre coté 101, un embout à visser 103.

L'enveloppe 10' de la cartouche 1 illustrée à la figure 2, est de type mixte : du coté 100, elle comporte un embout à sertir 102, son diamètre pourra par exemple être de 11 mm, et un embout à clipser 104 pourvu d'une double bague de 11 mm de l'autre coté 101 permettant l'usage de capuchons 11, 12 à clipser mais aussi de capuchons à sertir.

L'enveloppe 10" de la cartouche 1 illustrée à la figure 3, est également de type mixte permettant toutes les combinaisons de capuchons 11, 12 : du coté 100, elle comporte un embout à sertir 102, de l'autre coté 101, un embout universel 105 combinant un embout à sertir 102, un embout à visser 103 et entre les deux un embout à clipser 104 permettant l'usage de capuchons 11, 12 à clipser, à visser ou à sertir. L'enveloppe 10" peut remplacer les deux autres enveloppes 10, 10'.

Les différents embouts 102, 103, 104, 105 décrits font partie intégrante de l'enveloppe 10, 10', 10" en verre puisqu'ils sont réalisés lors de sa fabrication permettant de garantir la résistance et l'intégrité de l'enveloppe et par conséquent celles de la cartouche 1.

Ces différentes configurations d'embout permettent ainsi l'ouverture de la cartouche 1 sans utiliser d'outils spécifiques pour retirer le matériau adsorbant 13 si nécessaire.

La cartouche 1 pourra comprendre une enveloppe 10, 10', 10" dont les parois sont en verre revêtus d'un film (dépôt d'une phase sélective de type silicone ou PDMS) avec une sélectivité et une épaisseur de film appropriée. Après le dépôt de phase, la cartouche 1 est scellée en usine sous gaz inerte comme indiqué précédemment. Cette enveloppe 10, 10', 10" pourra être réutilisée plusieurs fois.

Une autre variante d'enveloppe plus longue pourra contenir des tubes de prélèvement du commerce utilisé en thermo désorption.

L'identification, le suivi et la traçabilité de la cartouche 1 sera possible car elle pourra être marquée soit par une gravure (non représentée) au laser d'un QR code ou d'un code à barres, soit par une étiquette résistante aux températures de plus de 400°C, soit par d'autres moyens d'identification, pour

le suivi du lot de fabrication et son usage lors de la mise en œuvre. La cartouche 1 pourra contenir un transpondeur (non représenté) afin d'être identifiée facilement pendant tout le cycle d'utilisation soit du prélèvement au stockage jusqu'à l'analyse.

Une calibration et un étalonnage de la cartouche 1 prête à l'emploi est possible. Afin de permettre une quantification des polluants prélevés, un kit de cartouches de calibration étalonnées peut être proposé. Les polymères seront marqués par des isotopes pour éviter les erreurs éventuelles de cross contamination. La série d'étalons de 50ng, 100, 200,500, 1000ng contiendra également un blanc et un tube contenant de la laine de quartz.

Une calibration par l'utilisateur est également possible. Le fait de livrer le système de prélèvement sous forme de cartouches 1 scellées des deux côtés par un joint d'étanchéité en silicone/Aluminium ou Aluminium/Silicone/Aluminium, permet à l'utilisateur d'injecter son propre étalon dans la cartouche 1 au travers du joint d'étanchéité 111, 121 et à l'aide d'une seringue adaptée.

Comme énoncé précédemment, la cartouche 1 contenant le polymère solide n'est pas sujet à des pertes de charges et donc à des variations de débits dus à la colmatation des polymères ou adsorbants classiques sous forme de poudre, sous l'influence du taux d'humidité présent lors du prélèvement, d'où une régularité et une exactitude du prélèvement.

Le matériau adsorbant 13 pourra également être greffé ou imbibé avec un agent dérivant de type DNPH pour l'analyse du formaldéhyde.

L'usage du verre ambré évite la dégradation de molécules photosensibles collectées. Le traitement de surface du verre (passivation ou désactivation) permet également d'abaisser les limites de détection de certaines molécules comme celles des pesticides.

L'utilisation d'un matériau adsorbant tel que des polymères solides prêts à l'emploi, permet de conserver un témoin avant l'analyse. Il est possible d'utiliser plusieurs polymères et d'en conserver un comme témoin ou de couper un polymère en deux parties égales avant analyse.

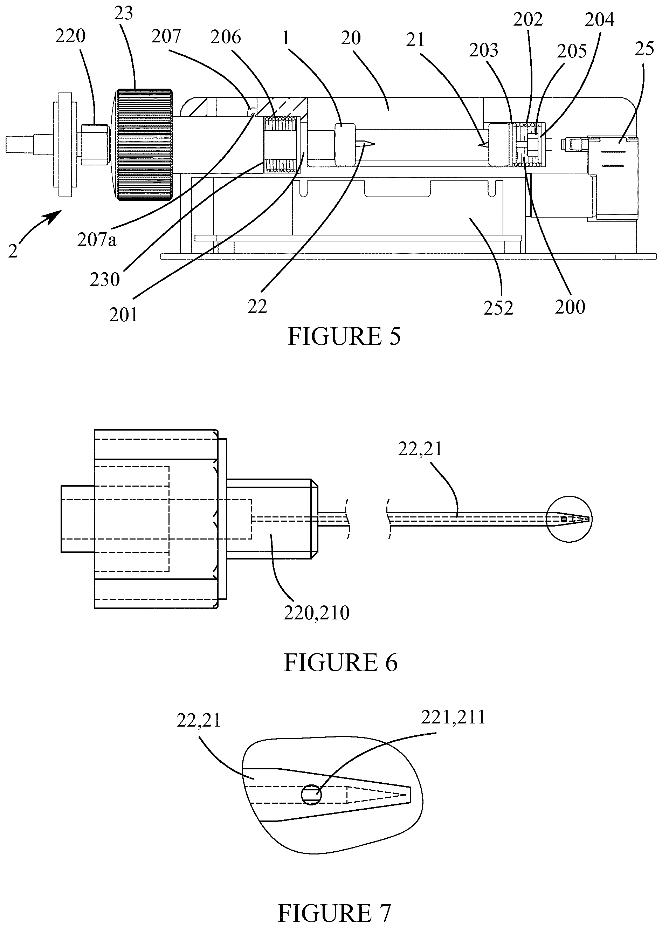

Le prélèvement peut s'effectuer de façon active au moyen d'un dispositif de prélèvement 2 selon l'invention illustré dans les figures 5 à 8. Le dispositif de prélèvement 2 comprend un boîtier 2' dans lequel est ménagé un logement 20 pour une cartouche 1 de prélèvement prête à l'emploi selon l'invention, ce logement 20 étant accessible par l'extérieur du boîtier 2'. Il comporte également une canule fixe 21 et une canule mobile 22 en translation disposées de chaque coté du logement 20, un moyen d'actionnement 23 de la canule mobile 22 entre une position escamotée et une position de perçage de la cartouche 1.

Chaque canule 21, 22, détaillée aux figures 6 et 7 est montée sur une bague 220, 210 de type Luer et se termine par une pointe conique avec un perçage latéral ou plusieurs perçages latéraux 221, 211.

La canule fixe 21 est placée à une des extrémités 200 du logement 20 à l'aide d'un écrou 205. Un ressort de compression 202 est disposé autour de la canule fixe 21 en appui sur l'extrémité 200 d'un coté et sur la cartouche 1 de l'autre. Il est guidé axialement dans un évidement du boîtier 2'. Deux rondelles 203 et 204 pourront être mises de chaque coté du ressort 202. Le ressort 202 facilitera l'extraction de la cartouche 1 du dispositif de prélèvement 2. La canule fixe 21 est reliée à une pompe 25 d'aspiration.

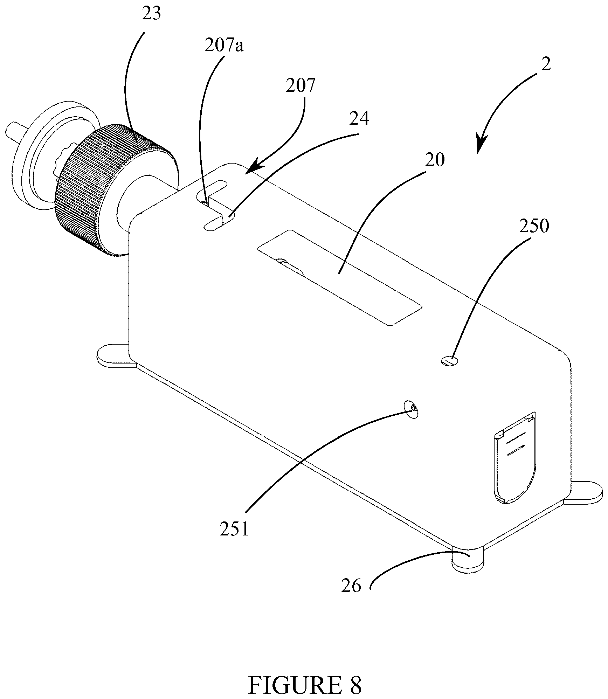

La canule mobile 22 est placée à l'autre extrémité 201 du logement 20; elle est solidaire du moyen d'actionnement 23 qui comprend un système de verrouillage 207 et un ressort de rappel 206. Ce moyen d'actionnement 23 est constitué dans l'exemple représenté d'une molette. Le système de verrouillage 207 est ici constitué d'un ergot 207a coulissant dans un chemin 24 prévu dans le boîtier 2' du dispositif de prélèvement 2 (voir figure 8). Le chemin 24 forme une chicane en S définissant deux positions stables de la canule mobile 22 : une position escamotée dans laquelle elle est en retrait par rapport au logement 20 et permet l'introduction et le retrait de la cartouche 1, et une position de perçage dans laquelle elle est saillante à l'intérieur du logement 20 et communique avec le volume intérieur de la cartouche 1 après avoir percé un des joints 110, 120. Tout autre moyen d'actionnement et de verrouillage équivalent peut convenir. Le ressort de rappel 206 est en appui sur l'extrémité 201 d'un coté et sur un rebord 230 du moyen d'actionnement 23 de l'autre. Il est guidé axialement dans un évidement du boîtier 2'.

Le dispositif de prélèvement 2 comprend également une commande 250 pour régler le débit de la pompe 25 et une sortie 251 pour évacuer l'air ou l'eau ou tout autre fluide à analyser. La pompe 25 est alimentée par une batterie 252 disposée dans le boîtier 2' du dispositif de prélèvement 2. Il peut comprendre en outre un indicateur de niveau de charge de la batterie 252. Si au cours du prélèvement, la batterie 252 arrive à un niveau de charge trop faible ne permettant pas de terminer le prélèvement prévu, l'opérateur sera informé de l'interruption du prélèvement pendant le cycle de collecte de l'échantillon par exemple au moyen d'une LED de couleur rouge. Le système dispositif de prélèvement 2 peut également comporter une présélection de temps fixes préprogrammés, mais également peut permettre de créer un cycle plus complexe de prélèvement via un logiciel externe et un port de communication sur le dispositif de prélèvement 2 pour piloter le fonctionnement de la pompe 25. Il peut enfin comporter des aimants 26 pour permettre sa fixation sur une surface métallique ou des clips pour être fixé à la ceinture ou tout autre moyen de fixation en fonction des applications.

Le dispositif de prélèvement 2 fonctionne en mode actif de la façon suivante: on dispose la cartouche 1 prête à l'emploi dans le logement 20, on pousse à l'aide du moyen d'actionnement 23 la canule mobile 22 vers la cartouche 1 qui va se déplacer jusqu'à atteindre la canule fixe 21, puis comprimer le ressort 202, ceci va avoir pour effet de percer la cartouche 1 à chacune de ses deux extrémités, on verrouille la position de perçage du moyen d'actionnement 23, et ensuite on met en marche la pompe 25 pour faire passer l'air ou l'eau ou tout autre fluide à analyser dans la cartouche 1, selon des paramètres de prélèvement déterminés (débit et durée de prélèvement). Après l'étape de prélèvement actif, on déverrouille le moyen d'actionnement 23 pour libérer la cartouche 1 des canules fixe 21 et mobile 22, permettant de retirer la cartouche 1 pour en effectuer l'analyse sur site ou en laboratoire. Ainsi, l'utilisation de la cartouche 1 selon l'invention est très pratique, sécurisée, sans risque de contamination de l'opérateur ou de l'environnement, puisque l'opérateur n'est jamais en contact avec le fluide analysé. De plus, les joints 110, 120 de la cartouche 1 se cicatrisent automatiquement de manière étanche après retrait des canules 21, 22, permettant le stockage à l'air ambiant ou au frais, le transport, la manipulation de la cartouche 1, sans perte d'informations, même sur plusieurs semaines, et ce jusqu'à l'étape d'analyse.

Ce dispositif de prélèvement 2 peut être facilement automatisé. Dans ce cas, il est complété d'un microprocesseur et d'un logiciel spécifique qui pilotent le fonctionnement de la pompe selon un programme pour effectuer le prélèvement soit en mode continu, soit en mode séquentiel ou pulsé. Ce mode séquentiel ou pulsé permet d'emprisonner le fluide à analyser dans la cartouche 1 et de le laisser interagir avec le matériau adsorbant 13 pendant une durée définie avant de l'expulser et de renouveler le cycle. Ce mode de fonctionnement est unique et très prometteur.

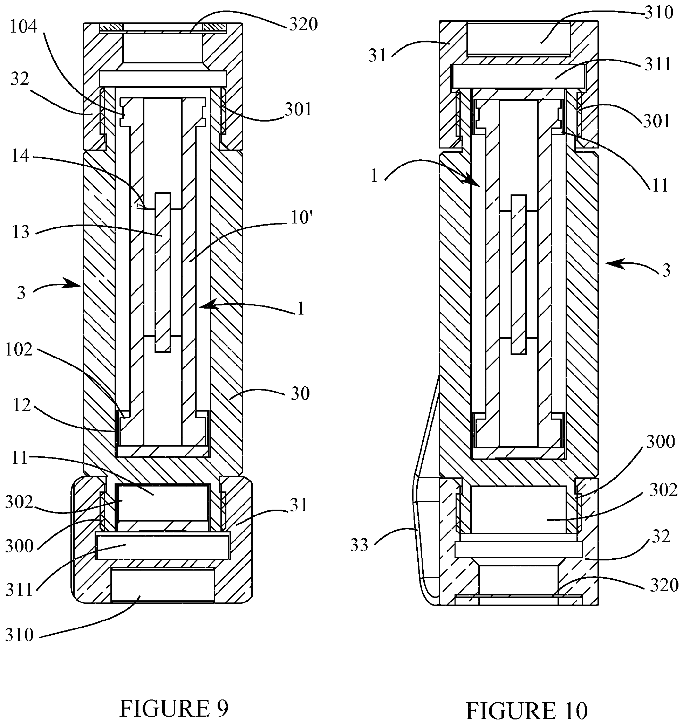

Le prélèvement peut aussi se faire de façon passive avec le dispositif de prélèvement 3 selon l'invention illustré dans les figures 9 et 10. Le dispositif de prélèvement 3 comprend un corps 30 creux définissant un logement pour recevoir une cartouche 1 prête à l'emploi selon l'invention, deux extrémités 300 et 301 filetées, un bouchon étanche 31 et un bouchon 32 ouvert équipé d'une grille de diffusion 320 clipsée. Une des extrémités 300 est fermée tandis que l'autre 301 est ouverte. L'extrémité 300 fermée comporte un évidement 302. Les deux bouchons 31 et 32 sont interchangeables, c'est-à-dire que l'on peut les disposer indifféremment sur chacune des extrémités 300 et 301. Le dispositif de prélèvement 3 est équipé d'une agrafe 33 pour pouvoir être fixé à la ceinture ou de tout autre moyen de fixation. Le bouchon étanche 31 comporte un aimant 310 du coté opposé au coté fileté, et un joint d'étanchéité 311 à l'intérieur de la partie filetée. L'aimant 310 permet de fixer le dispositif de prélèvement 3 sur un fond ou support métallique.

Pour réaliser le prélèvement de façon passive, on dévisse le bouchon ouvert 32 du dispositif de prélèvement 3 pourvu de la grille de diffusion 320, on retire le capuchon 11 clipsé ou vissé de la cartouche 1 prête à l'emploi pour ouvrir l'enveloppe 10 et laisser entrer l'air, on dispose la cartouche 1 dans le corps 30 creux, on revisse le bouchon ouvert 32 sur l'extrémité 301, on dévisse le bouchon étanche 31 pour placer le capuchon 11 de la cartouche 1 dans l'évidement 302 du corps 30, et on revisse le bouchon étanche 31 sur l'extrémité 300 (figure 9). On peut porter le dispositif de prélèvement 3 sur soi à l'aide de l'agrafe, ou le fixer magnétiquement sur un support métallique, ou encore le poser ou le suspendre dans la pièce à analyser. Une fois le prélèvement réalisé au bout d'une durée déterminée entre 8 heures et 4,5 jours, on dévisse les bouchons 31 et 32, on replace le capuchon 11 sur la cartouche 1 qui reste à l'intérieur du corps 30, on inverse les bouchons 31 et 32, et on visse le bouchon étanche 31 sur l'extrémité ouverte 301 et le bouchon ouvert 32 sur l'extrémité 300. La cartouche 1 est ainsi doublement protégée des éléments extérieurs par son capuchon 11 surmonté du bouchon étanche 31, et peut être transportée sans risques dans le dispositif de prélèvement 3 jusqu'au lieu d'analyse.

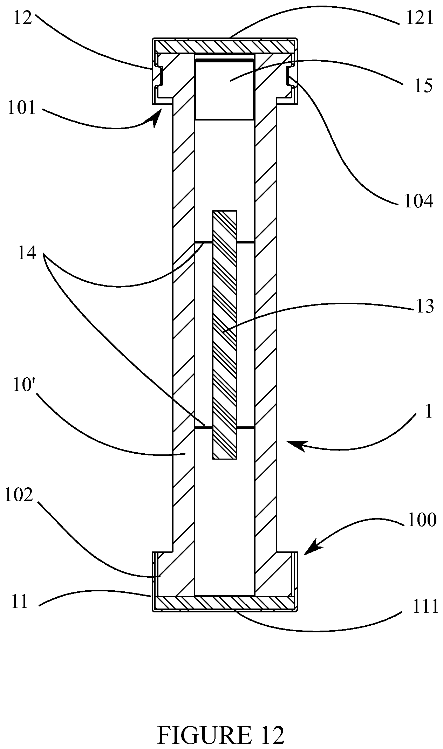

Le prélèvement de façon passive peut aussi être réalisé avec une cartouche 1 prête à l'emploi selon l'invention, comme celle de la figure 12. Dans cette cartouche 1, on a inséré une grille de diffusion 15 à une des extrémités 101 de l'enveloppe 10' de la cartouche 1 de la figure 2 par exemple. La cartouche 1 peut comprendre une agrafe de fixation (non représentée) pour pouvoir la porter à la taille ou l'accrocher sur un support, ou tout autre moyen de fixation adéquat. Pour réaliser le prélèvement de façon passive, on retire le capuchon 12 clipsé sur l'embout 104 pour ouvrir l'enveloppe 10' et laisser entrer l'air. Une fois le prélèvement réalisé au bout d'une durée déterminée entre 8 heures et 4,5 jours, on referme l'enveloppe 10' avec le capuchon 12. La cartouche 1 étant à nouveau étanche peut ainsi être stockée et transportée sans risque jusqu'au lieu d'analyse. On peut aussi utiliser l'enveloppe 10 ou 10" de la cartouche 1 des figures 1 ou 3 selon le type de capuchon 12.

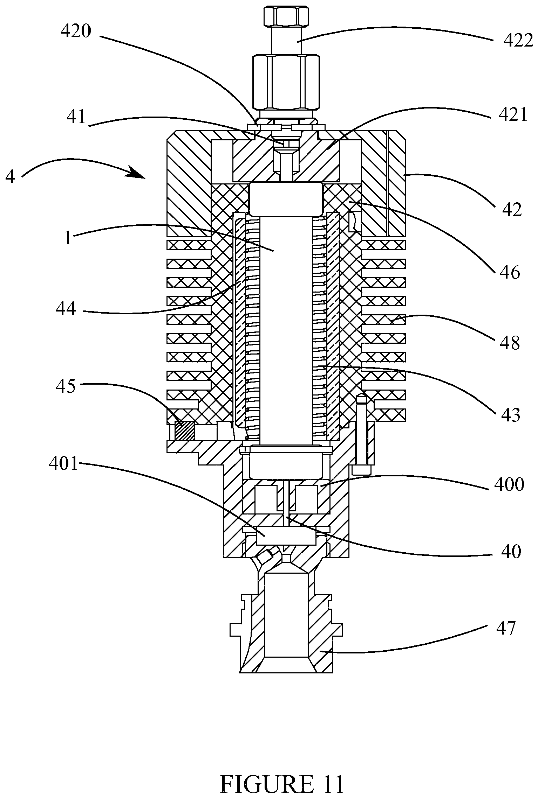

Une fois le prélèvement réalisé, il faut extraire les résultats et pour cela on peut utiliser un dispositif d'extraction 4 selon l'invention tel que visible à la figure 11. Le dispositif d'extraction 4 comprend un corps creux 46 définissant un logement pour recevoir une cartouche 1 selon l'invention utilisée lors d'un prélèvement passif ou actif. Il comporte en outre une canule fixe 40, une canule mobile 41 solidaire d'un bouchon 42, un élément chauffant 43 disposé dans le corps creux 46 pour entourer la cartouche 1, un isolant 44 de préférence en céramique disposé autour de l'élément chauffant 43, et un connecteur 45 pour alimenter électriquement l'élément chauffant 43. Le corps creux 46 comporte sur sa paroi externe des ailettes 48 permettant la dissipation de la chaleur. La canule fixe 40 est placée dans un porte aiguille 400 placé dans le corps creux 46 et relié à un embout d'injection 47 à travers un septum 401 d'un analyseur. La canule mobile 41 est reliée au bouchon 42 par un anneau élastique 420 et à un poussoir 421 placé à l'intérieur du bouchon 42 permettant de perforer les joints 110, 120 aux deux extrémités de la cartouche 1, par exemple par vissage du bouchon 42 sur le corps creux 46. Le bouchon 42 est équipé d'un adaptateur 422 afin de pouvoir connecter le dispositif d'extraction 4 à une alimentation de gaz vecteur. L'extraction du prélèvement effectué au moyen de la cartouche 1 est par conséquent rendue possible directement à partir de la cartouche 1 sans avoir besoin de l'ouvrir, préservant ainsi l'intégrité de son contenu, et évitant tout risque de contamination croisée. De plus, le chauffage rapide de la cartouche 1 dû à son excellente conductivité thermique permet de transférer immédiatement et sans avoir d'importants volumes mort les composés désorbés sur la colonne séparative et le détecteur approprié du chromatographe.

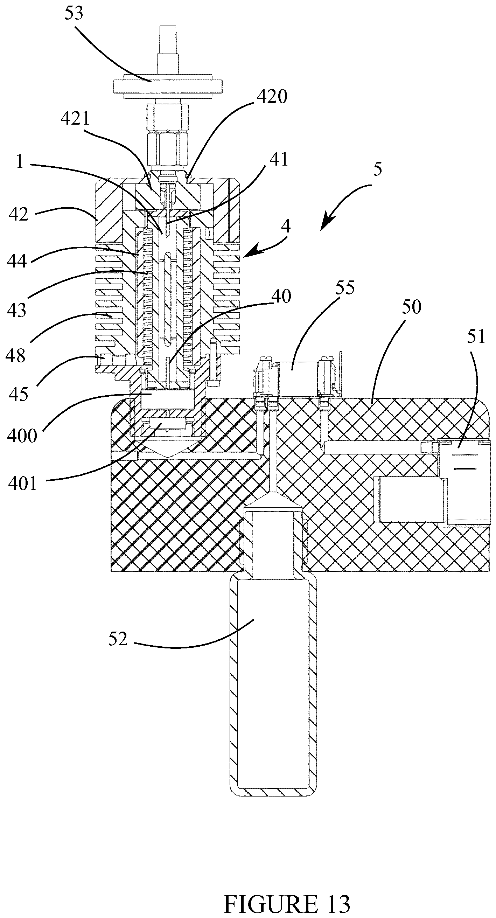

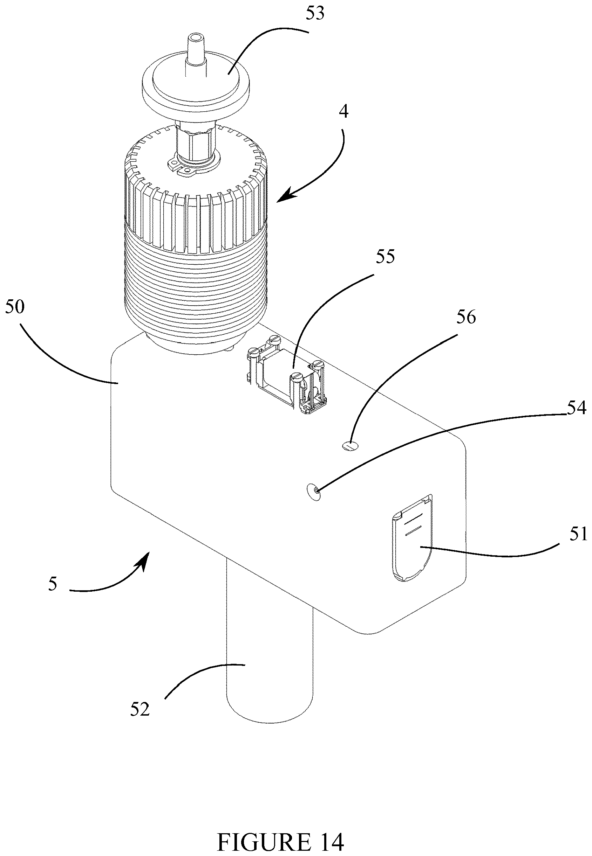

Le dispositif de prélèvement et d'extraction 5 selon l'invention illustré dans les figures 13 et 14 comprend un dispositif d'extraction semblable à celui de la figure 11 relié à un corps 50 comprenant une pompe d'aspiration 51 et un réservoir de gaz inerte 52. Le gaz inerte pourra être par exemple de l'hélium. Ce dispositif de prélèvement et d'extraction 5 fonctionne en mode actif de la façon suivante: on place une cartouche 1 prête à l'emploi selon l'invention dans le dispositif 5 de la même façon que pour le dispositif d'extraction 4. Un filtre 53 est placé sur le dispositif d'extraction 4 du coté opposé au corps 50, la pompe d'aspiration 51 est mise en route par une commande 56 pour aspirer l'air extérieur à travers le filtre 53, la cartouche 1 et le corps 50 via des conduits internes. L'air va ressortir par un orifice 54 (figure 14). Quand le prélèvement est terminé, on arrête la pompe 51, on retire la filtre 53 pour le remplacer par une aiguille (non représentée) avec un raccord Luer destiné à être reliée à un analyseur (non représenté). On ouvre le réservoir de gaz inerte 52 et avec l'électrovanne 55, on met en communication le réservoir 52 avec la cartouche 1. Ce dispositif de prélèvement et d'extraction 5 a l'avantage d'être portatif et de pouvoir être raccordé directement à un analyseur portable de terrain permettant d'analyser directement les composés collectés par la cartouche 1.

### Application industrielle

Dans tous les modes de prélèvement illustrés, il apparait clairement que le procédé selon l'invention se distingue des procédés connus par l'utilisation d'une seule et même cartouche 1 de prélèvement, prête à l'emploi, à usage unique, entièrement recyclable, de préférence en verre ambré, scellée aux deux extrémités 100, 101 par des joints d'étanchéité 110, 120 perçables ultra-performants, et contenant de préférence un polymère solide, universel, à usage unique, hydrophobe et à grand pouvoir adsorbant, disposé de façon optimale à l'intérieur de la cartouche 1, ladite cartouche étant en outre conditionnée sous gaz inerte. La cartouche 1 est avantageusement fermée par deux capuchons 11, 12 comportant chacun une ouverture 111, 121 fermée par lesdits joints d'étanchéité 110, 120 qui sont perçables, ces capuchons 11, 12 pouvant être scellés aux deux extrémités 100, 101, ou l'un au moins des capuchons 11, 12 pouvant être amovible par rapport à une des extrémités 100, 101 pour pouvoir notamment effectuer un prélèvement en mode passif. La cartouche 1 comporte à cet des embouts 102, 103, 104, 105 adaptés à ses deux extrémités 100, 101 qui sont intégrés à l'enveloppe 10, 10', 10" en verre. De plus, la cartouche 1 est identifiable grâce à un numéro de série unique et un flash code gravé au laser ou par déposition d'une étiquette résistante aux températures supérieures à 400°C.

Après l'étape de prélèvement, et sans passer par l'ouverture de la cartouche 1, contrairement aux dispositifs de prélèvement connus, il est à présent possible de désorber thermiquement, avec une faible consommation d'énergie et avec un faible gradient de température < 60°C, tous les éléments piégés sur le polymère. L'excellente inertie de la cartouche 1, sa faible masse thermique et son étanchéité parfaite permet d'obtenir un résultat plus fiable, plus reproductible, avec une meilleure sensibilité que les dispositifs classiques, sans aucun risque de contamination croisée.

Ainsi, la cartouche 1 selon l'invention servant à la fois pour le prélèvement et la désorption thermique, permet de garantir:
- La qualité des données collectées lors du prélèvement, ces données étant préservées et inaltérables dans le volume intérieur de la cartouche 1, puisque l'étape de désorption thermique ne nécessite pas d'ouvrir la cartouche 1,
- Un débit de fluide ou de gaz vecteur constant et identique lors des étapes de prélèvement et de thermodésorption par injection de gaz vecteur, favorisant la précision de l'analyse,
- Une rapidité de chauffage de la cartouche 1 lors de la thermodésorption, sans ajouter d'interface, simplifiant et réduisant la durée de l'analyse.

Ces différents avantages en sus de ceux déjà exposés précédemment permettent d'envisager la réalisation de dispositifs portables pour analyser les polluants prélevés directement sur le site de prélèvement, soit un gain considérable de temps et de coût pour une efficacité grandement améliorée.

Il ressort de cette description que l'invention permet d'atteindre les buts fixés et de pallier à tous les inconvénients des systèmes connus. Elle permet notamment d'offrir une solution globale du prélèvement à l'analyse, totalement maitrisée, sécurisée et optimisée, ce qu'aucune solution actuelle ne permet d'atteindre étant que les différents dispositifs nécessaires à ces différentes étapes proviennent de différents fabricants.

La présente invention n'est pas limitée aux exemples de réalisation décrits mais s'étend à toute modification et variante évidentes, dans l'étendue revendiquée, pour un homme du métier.

## Revendications

1. Procédé de prélèvement et d'extraction de polluants dans un fluide, dans lequel l'on utilise une seule et même cartouche de prélèvement (1) prête à l'emploi, à usage unique, pour effectuer dans une première étape ledit prélèvement en mode passif ou en mode actif, et dans une seconde étape l'extraction des polluants collectés par désorption thermique et circulation d'un gaz vecteur à travers ladite cartouche (1) sans avoir besoin de l'ouvrir préservant ainsi l'intégrité de son contenu et évitant tout risque de contamination croisée, l'étape de prélèvement étant réalisée au moyen de la cartouche de prélèvement (1) seule ou d'un dispositif de prélèvement (2, 3, 5) contenant ladite cartouche (1), et l'étape d'extraction étant réalisée au moyen d'un dispositif d'extraction (4) ou d'un dispositif de prélèvement et d'extraction (5) contenant ladite cartouche (1), ladite cartouche de prélèvement (1) comportant une enveloppe en matière inerte, contenant un matériau adsorbant (13), étant remplie d'un gaz inerte sous pression de sorte que cette surpression constitue un indicateur qui permet de vérifier la présence d'une pression dans la cartouche et donc de contrôler l'étanchéité de la cartouche avant utilisation, et étant fermée de façon étanche par deux capuchons (11, 12) situés aux deux extrémités (100, 101) de l'enveloppe (10, 10', 10"), chaque capuchon (11, 12) comportant une ouverture (111, 121) fermée par un joint d'étanchéité (110, 120) perçable constitué d'un film en silicone et d'au moins une couche barrière.

2. Procédé de prélèvement et d'extraction selon la revendication 1, **caractérisé en ce que**, pour effectuer l'étape de prélèvement en mode passif, l'on retire de ladite cartouche (1) un des capuchons (11, 12) pour ouvrir l'enveloppe (10, 10', 10") et laisser entrer le fluide à analyser, et une fois le prélèvement réalisé, l'on referme l'enveloppe (10, 10', 10") avec ledit capuchon (11, 12) pour rendre la cartouche (1) à nouveau étanche.

3. Procédé de prélèvement et d'extraction selon la revendication 1, **caractérisé en ce que**, pour effectuer l'étape de prélèvement en mode actif ou l'étape d'extraction, l'on fait passer le fluide à analyser ou le gaz vecteur à travers ladite cartouche (1) fermée de façon étanche, par des canules du dispositif de prélèvement (2), du dispositif d'extraction (4) ou du dispositif de prélèvement et d'extraction (5) agencées pour percer les extrémités (100, 101) de ladite cartouche (1) à travers lesdits joints d'étanchéité (110, 120).

4. Procédé de prélèvement et d'extraction selon la revendication 1, **caractérisé en ce que** ledit matériau adsorbant (13) contenu dans ladite cartouche (1) est un polymère plein, prêt à l'emploi, à usage unique, se présentant sous la forme d'un batonnet solide positionné dans la partie centrale de l'enveloppe (10, 10', 10") par au moins un centreur axial (14).

5. Cartouche de prélèvement (1) pour la mise en œuvre du procédé selon l'une quelconque des revendications précédentes, **caractérisée en ce qu'**elle constitue une cartouche prête à l'emploi, à usage unique, **en ce qu'**elle comprend une enveloppe (10, 10', 10") en matière inerte dans laquelle est disposé un matériau adsorbant (13), remplie d'un gaz inerte sous pression de sorte que cette surpression constitue un indicateur qui permet de vérifier la présence d'une pression dans la cartouche et donc de contrôler l'étanchéité de la cartouche avant utilisation, et fermée de façon étanche par deux capuchons (11, 12) situés aux deux extrémités (100, 101) de l'enveloppe (10, 10', 10"), chaque capuchon (11, 12) comportant une ouverture (111, 121) fermée par un joint d'étanchéité (110, 120) perçable, constitué d'un film en silicone et d'au moins une couche barrière.

6. Cartouche (1) selon la revendication 5, **caractérisée en ce que** l'enveloppe (10, 10', 10") est cylindrique.

7. Cartouche (1) selon l'une quelconque des revendications 5 et 6, **caractérisée en ce que** l'enveloppe (10, 10', 10") est en verre.

8. Cartouche (1) selon la revendication 7, **caractérisée en ce que** l'enveloppe (10, 10', 10") est en verre ambré.

9. Cartouche (1) selon l'une quelconque des revendications 5 à 8, **caractérisée en ce que** le matériau adsorbant (13) est un polymère plein, prêt à l'emploi, à usage unique, se présentant sous la forme d'un batonnet solide positionné dans la partie centrale de l'enveloppe (10, 10', 10") par au moins un centreur axial (14).

10. Cartouche (1) selon l'une quelconque des revendications 5 à 9, **caractérisée en ce que** le film barrière est en aluminium ou en téflon™.

11. Cartouche (1) selon l'une quelconque des revendications 5 à 10, **caractérisée en ce que** les extrémités (100, 101) de l'enveloppe (10, 10', 10") comportent des embouts à sertir (102), à visser (103), à clipser (104) et/ou universels (105) pour recevoir chacune un capuchon (11, 12) serti, vissé et/ou clipsé.

12. Cartouche (1) selon l'une quelconque des revendications 5 à 11, **caractérisée en ce qu'**elle comporte un marquage individuel de traçabilité.

13. Cartouche (1) selon l'une quelconque des revendications 7 à 12, **caractérisée en ce qu'**elle comporte une résistance chauffante intégrée dans son enveloppe (10, 10', 10") en verre, et **en ce que** les capuchons (11, 12) sont en métal et forment des électrodes raccordées à ladite résistance chauffante.

14. Dispositif de prélèvement actif (2) pour la mise en œuvre du procédé selon l'une quelconque des revendications 1 et 3, comprenant un logement (20) pour une cartouche de prélèvement (1), **caractérisé en ce qu'**il comprend une cartouche de prévèlement (1) selon l'une quelconque des revendications 5 à 13, une canule fixe (21) et une canule mobile (22) en translation disposées de chaque coté du logement (20), agencées pour percer les extrémités (100, 101) de ladite cartouche (1) à travers lesdits joints d'étanchéité (110, 120), un moyen d'actionnement (23) de la canule mobile (22) pour la déplacer entre une position escamotée et une position de perçage de la cartouche (1), et un système de verrouillage (207) de la canule mobile (22) en position de perçage, lesdites canules (21, 22) étant connectées à un circuit de fluide à analyser.

15. Dispositif de prélèvement (2) selon la revendication 14, **caractérisé en ce que** le moyen d'actionnement (23) comprend un ressort de rappel (206) pour ramener ladite canule mobile (22) de sa position de perçage à sa position escamotée.

16. Dispositif de prélèvement (2) selon l'une quelconque des revendications 14 et 15, **caractérisé en ce que** le moyen d'actionnement (23) comprend un système de verrouillage (207) en chicane.

17. Dispositif de prélèvement (2) selon l'une quelconque des revendications 14 à 16, **caractérisé en ce que** l'une des canules (22) est ouverte sur l'air extérieur et l'autre canule (21) à une pompe d'aspiration (25).

18. Dispositif de prélèvement (2) selon l'une quelconque des revendications 14 à 16, **caractérisé en ce que** l'une des canules (22) est connectée à une arrivée d'eau et l'autre canule (21) à une sortie d'écoulement gravitaire.

19. Dispositif de prélèvement (2) selon la revendication 18, **caractérisé en ce qu'**une électrovanne est disposée en amont de la canule (22) connectée à l'arrivée d'eau.

20. Dispositif de prélèvement (2) selon l'une quelconque des revendications 14 à 16, **caractérisé en ce que** les canules (21, 22) débouchent dans un même flacon d'eau et qu'une pompe est disposée entre une des canules et le flacon.

21. Dispositif de prélèvement (2) selon l'une quelconque des revendications 14 à 16, **caractérisé en ce que** l'une des canules (22) comprend un embout buccal.

22. Dispositif de prélèvement passif (3) pour la mise en œuvre du procédé selon l'une quelconque des revendications 1 et 2, comprenant un corps creux (30) définissant un logement pour une cartouche de prélèvement (1), **caractérisé en ce qu'**il comprend une cartouche de prélèvement (1) selon l'une quelconque des revendications 5 à 13, **en ce que** le corps creux (30) comprend une extrémité fermée (300) et une extrémité ouverte (301), et **en ce que** ledit dispositif de prélèvement passif (3) comporte deux bouchons (31, 32) montés de manière amovible sur lesdites extrémités (300, 301) pour être interchangeables, un premier bouchon étanche (31) et un deuxième bouchon ouvert (32) comprenant une grille de diffusion (320).

23. Dispositif de prélèvement passif (3) selon la revendication 22, **caractérisé en ce que** l'extrémité fermée (300) comprend un évidement (302) fermé par un des bouchons (31, 32) pour recevoir un des capuchons (11, 12) de la cartouche (1) pendant l'étape de prélèvement.

24. Dispositif de prélèvement passif (3) selon l'une quelconque des revendications 22 et 23, **caractérisé en ce que** le bouchon étanche (31) comporte un aimant (310) pour fixer ledit dispositif sur un support métallique.

25. Dispositif de prélèvement passif pour la mise en œuvre du procédé selon l'une quelconque des revendications 1 et 2, comprenant une cartouche de prélèvement (1) selon l'une quelconque des revendications 5 à 13, **caractérisé en ce que** la cartouche (1) constitue à elle seule ledit dispositif de prélèvement passif et **en ce qu'**elle est équipée d'une grille de diffusion (15) disposée à proximité d'une extrémité (100, 101) de l'enveloppe (10, 10', 10") et d'un capuchon (11, 12) étanche clipsé ou vissé sur ladite extrémité.

26. Dispositif d'extraction (4) pour la mise en œuvre du procédé selon l'une quelconque des revendications 1 et 3, disposé entre une entrée d'un gaz vecteur et un analyseur, comprenant un corps creux (46) définissant un logement pour une cartouche de prélèvement (1), et un élément chauffant (43) de la cartouche (1), **caractérisé en ce qu'**il comprend une cartouche de prélèvement (1) selon l'une quelconque des revendications 5 à 13, une canule fixe (40) et une canule mobile (41) en translation disposées de chaque coté du logement, agencées pour percer les extrémités (100, 101) de ladite cartouche (1) à travers lesdits joints d'étanchéité (110, 120), un poussoir (421) couplé à la canule mobile (41) pour la déplacer entre une position escamotée et une position de perçage de la cartouche (1), **en ce qu'**une des canules (41) est destinée à être reliée à l'entrée de gaz vecteur, et l'autre canule (40) est destinée à être reliée à l'injecteur d'un analyseur.

27. Dispositif de prélèvement et d'extraction (5) pour la mise en œuvre du procédé selon l'une quelconque des revendications 1 et 3, **caractérisé en ce qu'**il comprend un dispositif d'extraction (4) selon la revendication 26 relié à un corps (50) comprenant une pompe d'aspiration (51) et un réservoir de gaz inerte (52), une des canules (40) étant reliée par une électrovanne (55) à ladite pompe d'aspiration (51) lors de l'étape de prélèvement ou audit réservoir de gaz inerte (52) lors de l'étape d'extraction, et l'autre canule (41) étant destinée à être reliée à une entrée d'air lors de l'étape de prélèvement ou à un analyseur lors de l'étape d'extraction.

## Patentansprüche

1. Verfahren zur Entnahme und Extraktion von Schadstoffen aus einer Flüssigkeit, bei dem eine einzige Probenahmekassette (1), einsatzbereit zum Einmalgebrauch, eingesetzt wird, um in einem ersten Schritt diese Entnahme im passiven oder aktiven Modus durchzuführen und in einem zweiten Schritt die Entnahme der gesammelten Schadstoffe durch thermische Desorption und Zirkulation eines Vektorgases durch die genannte Kassette (1) hindurch, ohne dass diese geöffnet werden muss, wodurch die Unversehrtheit des Inhaltes gewahrt wird und jedes Risiko einer Kreuzkontamination vermieden wird, der Entnahmeschritt wird mittels der Probenahmekassette (1) allein oder mittels einer Probenahmevorrichtung (2, 3, 5), die diese Kassette (1) enthält, durchgeführt und der Extraktionsschritt wird mittels einer Extraktionsvorrichtung (4) oder einer Probenahme- und Extraktionsvorrichtung (5), die diese Kassette (1) enthält, durchgeführt, diese Probenahmekassette (1) weist eine Hülle aus einem inerten Material auf, die ein Adsorptionsmittel (13) enthält, das mit einem inerten Gas unter Druck gefüllt ist, so dass dieser Überdruck einen Indikator darstellt, mit dem es möglich ist, das Vorhandensein eines Drucks in der Kassette (1) zu überprüfen und damit die Dichtigkeit der Kassette vor dem Einsatz, und sie ist durch zwei an den beiden Enden (100, 101) der Hülle (10, 10', 10") befindliche Kappen (11, 12) dicht verschlossen, jede Kappe (11, 12) hat dabei eine Öffnung (111, 121), die durch eine durchstoßbare Dichtung (110, 120) aus einer Silikonfolie und mindestens einer Barriereschicht verschlossen ist.

2. Verfahren zur Entnahme und Extraktion nach Anspruch 1, **dadurch gekennzeichnet, dass** zur Durchführung der Entnahme im passiven Modus eine der Kappen (11, 12) aus dieser Kassette (1) herausgezogen wird, um die Hülle (10, 10', 10") zu öffnen und die zu analysierende Flüssigkeit eindringen zu lassen, und dass sobald die Entnahme durchgeführt wurde, die Hülle (10, 10', 10") mit der genannten Kappe (11, 12) verschlossen wird, damit die Kassette (1) erneut dicht ist.

3. Verfahren zur Entnahme und Extraktion nach Anspruch 1, **dadurch gekennzeichnet, dass** zur Durchführung der Entnahme im aktiven Modus oder dem Extraktionsschritt, die zu analysierende Flüssigkeit oder das Vektorgas über Hohlnadeln der Probenahmevorrichtung (2), der Extraktionsvorrichtung (4) oder der Probenahme- und Extraktionsvorrichtung (5), durch diese dicht verschlossene Kassette (1) geleitet wird, die so eingerichtet sind, dass sie die Enden (100, 101) dieser Kassette (1) durch die genannten Dichtungen (110, 120) hindurch durchstechen können.

4. Verfahren zur Entnahme und Extraktion nach Anspruch 1, **dadurch gekennzeichnet, dass** das genannte, in der Kassette (1) enthaltene Adsorptionsmittel (13) ein Vollpolymer ist, einsatzfertig und zum Einmalgebrauch, das die Form eines festen Stäbchens hat, das im zentralen Teil der Hülle (10, 10', 10") über mindestens eine Zentriervorrichtung (14) angeordnet ist.

5. Probenahmekassette (1) zur Umsetzung des Verfahrens nach irgendeinem der vorstehenden Ansprüche, **dadurch gekennzeichnet, dass** es sich um eine einsatzfertige Kassette zum Einmalgebrauch handelt, mit einer Hülle (10, 10', 10") aus inertem Material, die ein Adsorptionsmittel (13) enthält, das mit einem inerten Gas unter Druck gefüllt ist, so dass dieser Überdruck einen Indikator darstellt, mit dem es möglich ist, das Vorhandensein eines Drucks in der Kassette zu überprüfen und damit die Dichtigkeit der Kassette vor dem Einsatz zu prüfen und die durch zwei an den beiden Enden (100, 101) der Hülle (10, 10', 10") befindliche Kappen (11, 12) dicht verschlossen ist, jede Kappe (11, 12) hat eine Öffnung (111, 121), die durch eine durchstoßbare Dichtung (110, 120) aus einer Silikonfolie und mindestens eine Barriereschicht verschlossen ist.

6. Kassette (1) nach Anspruch 5, **dadurch gekennzeichnet, dass** die Hülle (10, 10', 10") zylinderförmig ist.

7. Kassette (1) nach irgendeinem der Ansprüche 5 und 6, **dadurch gekennzeichnet, dass** die Hülle (10, 10', 10") aus Glas besteht.

8. Kassette (1) nach Anspruch 7, **dadurch gekennzeichnet, dass** die Hülle (10, 10', 10") aus bernsteinfarbenem Glas besteht.

9. Kassette (1) nach irgendeinem der Ansprüche 5 bis 8, **dadurch gekennzeichnet, dass** das Adsorptionsmittel (13) ein Vollpolymer ist, einsatzfertig, zum Einmalgebrauch, das die Form eines festen Stäbchens hat, das im zentralen Teil der Hülle (10, 10', 10") über mindestens eine Zentriervorrichtung (14) angeordnet ist.

10. Kassette (1) nach irgendeinem der Ansprüche 5 bis 9, **dadurch gekennzeichnet, dass** die Barriereschicht aus Aluminium oder Teflon™ besteht.

11. Kassette (1) nach irgendeinem der Ansprüche 5 bis 10, **dadurch gekennzeichnet, dass** die Enden (100, 101) der Hülle (10, 10', 10") mit Ansatzstücken zum Pressen (102), Schrauben (103), Clipsen (104) und/oder universell (105) zur Aufnahme jeweils einer gepressten, geschraubten oder geclipsten Kappe (11, 12), versehen sind.

12. Kassette (1) nach irgendeinem der Ansprüche 5 bis 11, **dadurch gekennzeichnet, dass** sie eine individuelle Markierung zur Rückverfolgbarkeit enthält.

13. Kassette (1) nach irgendeinem der Ansprüche 7 bis 12, **dadurch gekennzeichnet, dass** sie einen Heizwiderstand, integriert in ihrer Glashülle (10, 10', 10") enthält, und dass die Kappen (11, 12) aus Metall bestehen und Elektroden bilden, die mit diesem Heizwiderstand verbunden sind.

14. Aktive Probenahmevorrichtung (2) zur Umsetzung des Verfahrens nach irgendeinem der Ansprüche 1 und 3, mit einer Unterbringung (20) für eine Probenahmekassette (1), **dadurch gekennzeichnet, dass** sie eine Pobenahmekassette (1) nach irgendeinem der Ansprüche 5 bis 13 enthält, eine feste Hohlnadel (21) und eine translatorisch mobile Hohlnadel (22), beiderseits der Unterbringung (20) verschoben angeordnet, dazu eingerichtet, die Enden (100, 101) dieser Kassette (1) durch diese Dichtung (110, 120) hindurch zu durchstechen, eine Betätigungsvorrichtung (23) für die mobile Hohlnadel (22), um sie zwischen einer ausgeklappten Position und einer Position zum Durchstechen der Kassette (1) zu bewegen, sowie ein Verriegelungssystem (207) für die mobile Hohlnadel (22) in der Durchstechposition, diese beiden Hohlnadeln (21, 22) sind mit einem zu analysierenden Flüssigkeitskreislauf verbunden.

15. Probenahmevorrichtung (2) nach Anspruch 14, **dadurch gekennzeichnet, dass** die Betätigungsvorrichtung (23) eine Rückstellvorrichtung enthält, um die genannte mobile Hohlnadel (22) aus der Durchstechposition in die ausgeklappte Position zurück zu bringen.

16. Probenahmevorrichtung (2) nach irgendeinem der Ansprüche 14 bis 15, **dadurch gekennzeichnet, dass** die Betätigungsvorrichtung (23) ein Verriegelungssystem (207) mit Schikane enthält.

17. Probenahmevorrichtung (2) nach irgendeinem der Ansprüche 14 bis 16, **dadurch gekennzeichnet, dass** eine der Hohlnadeln (22) zur Außenluft offen ist und die andere Hohlnadel (21) zu einer Ansaugpumpe (25).

18. Probenahmevorrichtung (2) nach irgendeinem der Ansprüche 14 bis 16, **dadurch gekennzeichnet, dass** eine der Hohlnadeln (22) mit einem Wassereinlass verbunden ist und die andere Hohlnadel (21) mit einem Freifall- Auslass.

19. Probenahmevorrichtung (2) nach Anspruch 18, **dadurch gekennzeichnet, dass** ein Magnetventil vor der Hohlnadel (22), die mit dem Wassereinlass verbunden ist, eingebaut ist.

20. Probenahmevorrichtung (2) nach irgendeinem der Ansprüche 14 bis 16, **dadurch gekennzeichnet, dass** die Hohlnadeln (21, 22) im selben Wasserbehälter münden und dass eine Pumpe zwischen einer der Hohlnadeln und dem Behälter angeordnet ist.

21. Probenahmevorrichtung (2) nach irgendeinem der Ansprüche 14 bis 16, **dadurch gekennzeichnet, dass** eine der Hohlnadeln (22) ein Mundstück enthält.

22. Passive Probenahmevorrichtung (3) zur Umsetzung des Verfahrens nach irgendeinem der Ansprüche 1 und 2, mit einem Hohlkörper (30), der eine Unterbringung für eine Probenahmekassette (1) definiert, **dadurch gekennzeichnet, dass** sie eine Probenahmekassette (1) nach irgendeinem der Ansprüche 5 bis 13 enthält, dass der Hohlkörper (30), ein geschlossenes (300) und ein offenes (301) umfasst, und dadurch, dass diese passive Probenahmevorrichtung (3) zwei Stopfen (31, 32) enthält, die abnehmbar auf diesen Enden (300, 301) montiert sind, so dass sie ausgetauscht werden können, und zwar einen ersten dichten Stopfen (31) und einen zweiten offenen Stopfen (32), der ein Verteilergitter (320) enthält.

23. Passive Probenahmevorrichtung (3) nach Anspruch 22, **dadurch gekennzeichnet, dass** das geschlossene Ende (300) eine Aussparung (302) enthält, die durch einen der Stopfen (31, 32) verschlossen ist, um eine der Kappen (11, 12) der Kassette (1) während des Probenahmeschritts aufzunehmen.

24. Passive Probenahmevorrichtung (3) nach irgendeinem der vorstehenden Ansprüche 22 und 23, **dadurch gekennzeichnet, dass** der dichte Stopfen (31) einen Magnet (310) enthält um diese Vorrichtung auf einem Metallträger zu befestigen.

25. Passive Probenahmevorrichtung zur Umsetzung des Verfahrens nach einem der vorstehenden Ansprüche 1 und 2, die eine Probenahmekassette (1) nach irgendeinem der Ansprüche 5 bis 13 enthält, **dadurch gekennzeichnet, dass** die Kassette (1) alleine die passive Probenahmevorrichtung bildet und dass sie mit einem Verteilergitter (15) ausgestattet ist, das in der Nähe eines Endes (100,101) der Hülle (10, 10', 10") angeordnet ist und mit einer dichten Kappe (11, 12), die auf dieses Ende geclipst oder geschraubt ist.

26. Extraktionsvorrichtung (4) zur Umsetzung des Verfahrens nach einem der vorstehenden Ansprüche 1 und 3, angeordnet zwischen einem Vektorgaseinlass und einer Analysevorrichtung, mit einem Hohlraum (46), der eine Aussparung für eine Probenahmekassette (1) und ein Heizelement (43) für die Kassette (1) enthält, **dadurch gekennzeichnet, dass** sie eine Probenahmekassette (1) nach irgendeinem der vorstehenden Ansprüche 5 bis 13 enthält, eine feste Hohlnadel (40) und eine translatorisch mobile Hohlnadel (41), die verschiebbar beiderseits der Unterbringung angeordnet sind, eingerichtet um die Enden (100, 101) dieser Kassette (1), um diese Dichtungen (110, 120) zu durchstechen, ein Stößel (421), gekoppelt an die mobile Hohlnadel (41), um sie zwischen einer ausgeklappten Position und einer Durchstech- Position der Kassette (1) zu bewegen, dadurch dass eine der Hohlnadeln (41) mit dem Vektorgaseinlass verbunden werden soll und die andere Hohlnadel (40) mit dem Einspritzer eines Analysegerätes verbunden werden soll.

27. Probenahme und Extraktionsvorrichtung (5) zur Umsetzung des Verfahrens nach einem der vorstehenden Ansprüche 1 und 3, **dadurch gekennzeichnet, dass** sie eine Extraktionsvorrichtung (4) nach Anspruch 26 enthält, verbunden mit einem Körper (50), mit einer Ansaugpumpe (51) und einem Inertgasvorrat (52), eine der Hohlnadeln (40) ist dabei über ein Magnetventil (55) beim Schritt der Entnahme mit dieser Ansaugpumpe (51) oder mit diesem Inertgasvorrat (52) beim Schritt der Extraktion verbunden und die andere Hohlnadel (41) ist dazu vorgesehen, mit einem Lufteinlass beim Entnahmeschritt oder einem Analysegerät beim Extraktionsschritt verbunden zu werden.

## Claims

1. Method for sampling and extracting pollutants in a fluid, wherein one uses one and the same ready-to-use, single-use sampling cartridge (1) to perform in a first step said sampling in passive mode or in active mode, and in a second step the extraction of the collected pollutants by thermal desorption and circulation of a carrier gas through said cartridge (1) without the need to open it thus preserving the integrity of its content and avoiding any risk of cross-contamination, the sampling step being carried out by means of the sole sampling cartridge (1) or of a sampling device (2, 3, 5) containing said cartridge (1), and the extraction step being carried out by means of an extracting device (4) or of a sampling and extracting device (5) containing said cartridge (1), said sampling cartridge (1) comprising an envelope out of an inert material, containing an adsorbent material (13), being filed with an inert gas under pressure so that this overpressure constitutes an indicator that allows checking the presence of a pressure in cartridge and thus checking the tightness of cartridge before using it, and sealed in a leaktight manner by two caps (11, 12) located at both ends (100, 101) of the envelope (10, 10', 10"), each cap (11, 12) having an opening (111, 121) closed by a pierceable seal (110, 120) made of a silicone film and at least one barrier layer.

2. Method for sampling and extracting according to claim 1, **characterized in that**, to perform the sampling step in passive mode, one removes one of the caps (11, 12) from said cartridge (1) to open the envelope (10, 10', 10") and let the fluid to be analyzed enter and, once the sampling is made, one closes the envelope (10, 10', 10") again with said cap (11, 12) to render the cartridge leaktight again.

3. Method for sampling and extracting according to claim 1, **characterized in that**, to perform the sampling step in active mode or the extraction step, one leads the fluid to be analyzed or the carrier gas through said cartridge (1) sealed in a leaktight manner by means of cannulas of the sampling device (2), of the extracting device (4) or of the sampling and extracting device (5), arranged to pierce the ends (100, 101) of said cartridge (1) through said seals (110, 120).

4. Method for sampling and extracting according to claim 1, **characterized in that** said adsorbent material (13) contained in said cartridge (1) is a ready-to-use and single-use full polymer, in the shape of a solid stick positioned in the central section of the envelope (10, 10', 10") by at least one axial centering element (14).

5. Sampling cartridge (1) for implementing the method according to any of the previous claims, **characterized in that** it constitutes a ready-to-use, single-use sampling cartridge (1), **in that** it comprises an envelope (10, 10', 10") out of an inert material, wherein an adsorbent material (13) is placed, filed with an inert gas under pressure so that this overpressure constitutes an indicator that allows checking the presence of a pressure in cartridge and thus checking the tightness of cartridge before using it, and sealed in a leaktight manner by two caps (11, 12) located at both ends (100, 101) of the envelope (10, 10', 10"), each cap (11, 12) having an opening (111, 121) closed by a pierceable seal (110, 120) made of a silicone film and at least one barrier layer.

6. Cartridge (1) according to claim 5, **characterized in that** the envelope (10, 10', 10") is cylindrical.

7. Cartridge (1) according to any of claims 5 and 6, **characterized in that** the envelope (10, 10', 10") is out of glass.

8. Cartridge (1) according to claim 7, **characterized in that** the envelope (10, 10', 10") is out of amber glass.

9. Cartridge (1) according to any of claims 5 to 8, **characterized in that** the adsorbing material (13) is a ready-to-use, single-use full polymer in the shape of a solid stick positioned in the central section of the envelope (10, 10', 10") by at least one axial centering element (14).

10. Cartridge (1) according to any of claims 5 to 9, **characterized in that** the barrier film is out of aluminum or Teflon™.

11. Cartridge (1) according to any of claims 5 to 10, **characterized in that** the ends (100, 101) of the envelope (10, 10', 10") comprise crimp-on (102), screw-on (103), clip-on (104) and/or universal (105) end pieces to receive each a crimped, screwed and/or clipped cap (11, 12).

12. Cartridge (1) according to any of claims 5 to 11, **characterized in that** it comprises an individual traceability marking.

13. Cartridge (1) according to any of claims 7 to 12, **characterized in that** it comprises a heating resistor integrated in its glass envelope (10, 10', 10"), and **in that** the caps (11, 12) are out of metal and form electrodes connected to said heating resistor.

14. Active sampling device (2) for implementing the method according to any of claims 1 and 3, comprising a space (20) for a sampling cartridge (1), **characterized in that** it comprises a sampling cartridge (1) according to any of claims 5 to 13, a fixed cannula (21) and a cannula (22) movable in translation arranged on either side of the space (20), arranged to pierce the ends (100, 101) of said cartridge (1) through said seals (110, 120), a means (23) for actuating the movable cannula (22) between a retracted position and a cartridge (1) piercing position, and a system (207) for locking the movable cannula (22) in piercing position, said cannulas (21, 22) being connected to a circuit for the fluid to be analyzed.

15. Sampling device (2) according to claim 14, **characterized in that** the actuating means (23) comprises a return spring (206) to bring back said movable cannula (22) from its piercing position to its retracted position.

16. Sampling device (2) according to any of claims 14 and 15, **characterized in that** the actuating means (23) comprises a locking means (207) in the form of a chicane.

17. Sampling device (2) according to any of claims 14 to 16, **characterized in that** one of the cannulas (22) is open towards the external air and the other cannula (21) is connected to a suction pump (25).

18. Sampling device (2) according to any of claims 14 to 16, **characterized in that** one of the cannulas (22) is connected to a water supply and the other cannula (21) to a gravity discharge outlet.

19. Sampling device (2) according to claim 18, **characterized in that** a solenoid valve is located upstream of the cannula (22) connected to the water supply.

20. Sampling device (2) according to any of claims 14 to 16, **characterized in that** the cannulas (21, 22) end in a same water vial and **in that** a pump is located between one of the cannulas and the vial.

21. Sampling device (2) according to any of claims 14 to16, **characterized in that** one of the cannulas (22) comprises a mouthpiece.

22. Passive sampling device (3) for implementing the method according to any of claims 1 and 2, comprising a hollow body (30) defining a space for a sampling cartridge (1), **characterized in that** it comprises a sampling cartridge (1) according to any of claims 5 to 13, **in that** the hollow body (30) comprises a closed end (300) and an open end (301), and **in that** said passive sampling device (3) comprises two plugs (31, 32) mounted in a removable manner on said ends (300, 301) so as to be interchangeable, a first tight plug (31) and a second open plug (32) comprising a diffusion grid (320).

23. Passive sampling device (3) according to claim 22, **characterized in that** the closed end (300) comprises a recess (302) closed by one of the plugs (31, 32) to receive one of the caps (11, 12) of the cartridge (1) during the sampling step.

24. Passive sampling device (3) according to any of claims 22 and 23, **characterized in that** the tight plug (31) comprises a magnet (310) to fasten said device onto a metallic support.

25. Passive sampling device for implementing the method according to any of claims 1 and 2, comprising a sampling cartridge (1) according to any of claims 5 to 13, **characterized in that** the sole cartridge (1) forms said passive sampling device and **in that** it is equipped with a diffusion grid (15) arranged close to an end (100, 101) of the envelope (10, 10', 10") and with a tight cap (11, 12) clipped or screwed on said end.

26. Extracting device (4) for implementing the method according to any of claims 1 and 3, arranged between a carrier gas inlet and an analyzer, comprising a hollow body (46) that defines a space for a sampling cartridge (1), and a heating element (43) of the cartridge (1), **characterized in that** it comprises a sampling cartridge (1) according to any of claims 5 to 13, a fixed cannula (40) and a cannula (41) movable in translation arranged on each side of the housing, a pusher (421) coupled with the movable cannula (41) to move it between a retracted position and a cartridge (1) piercing position, arranged to pierce the ends (100, 101) of said cartridge (1) through said seals (110, 120), and **in that** one of the cannulas (41) is intended for being connected to the carrier gas inlet and the other cannula (40) is intended for being connected to the injector of an analyzer.

27. Sampling and extracting device (5) for implementing the method according to any of claims 1 and 3, **characterized in that** it comprises an extracting device (4) according to claim 26 connected to a body (50) comprising a suction pump (51) and an inert gas tank (52), one of the cannulas (40) being connected through a solenoid valve (55) to said suction pump (51) during the sampling step or to said inert gas tank (52) during the extraction step, and the other cannula (41) being intended to be connected to an air inlet during the sampling step or to an analyzer during the extraction step.
